(19) Europäisches Patentamt
European Patent Office
Office européen des brevets

(11) **EP 3 571 348 B1**

(12) **EUROPEAN PATENT SPECIFICATION**

(45) Date of publication and mention of the grant of the patent:
**06.03.2024 Bulletin 2024/10**

(21) Application number: **18711393.1**

(22) Date of filing: **18.01.2018**

(51) International Patent Classification (IPC):
*D21H 17/34* $^{(2006.01)}$  *D21H 17/37* $^{(2006.01)}$
*D21H 17/44* $^{(2006.01)}$  *D21H 17/45* $^{(2006.01)}$
*D21H 17/47* $^{(2006.01)}$  *D21H 17/54* $^{(2006.01)}$
*D21H 17/55* $^{(2006.01)}$  *D21H 19/20* $^{(2006.01)}$
*D21H 19/24* $^{(2006.01)}$  *D21H 21/20* $^{(2006.01)}$
*D21H 23/04* $^{(2006.01)}$  *D21H 23/24* $^{(2006.01)}$

(52) Cooperative Patent Classification (CPC):
**D21H 21/20; D21H 17/34; D21H 17/37;
D21H 17/44; D21H 17/45; D21H 17/47;
D21H 17/54; D21H 17/55; D21H 19/20;
D21H 19/24; D21H 23/04; D21H 23/24**

(86) International application number:
**PCT/IB2018/000067**

(87) International publication number:
**WO 2018/134675 (26.07.2018 Gazette 2018/30)**

(54) **HIGH MOLECULAR WEIGHT TEMPORARY WET STRENGTH RESIN FOR PAPER**

HOCHMOLEKULARES TEMPORÄRES NASSFESTES HARZ FÜR PAPIER

RÉSINE DE RÉSISTANCE À L'HUMIDITÉ TEMPORAIRE DE POIDS MOLÉCULAIRE ÉLEVÉ POUR PAPIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.01.2017 US 201762447615 P**

(43) Date of publication of application:
**27.11.2019 Bulletin 2019/48**

(73) Proprietor: **Solenis Technologies Cayman, L.P.
George Town, Grand Cayman, KY1-1104 Cyaman (KY)**

(72) Inventor: **WRIGHT, Matthew
Weddington, NC 28104 (US)**

(74) Representative: **LKGlobal UK Ltd.
Cambridge House
Henry Street
Bath BA1 1BT (GB)**

(56) References cited:
**EP-A2- 2 386 580**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND**

In the discussion that follows, reference is made to certain products and/or methods. However, the following references should not be construed as an admission that these products and/or methods constitute prior art. Applicants expressly reserve the right to demonstrate that such products and/or methods do not qualify as prior art.

It has been well established knowledge as well as commercial practice to use glyoxalated polyacrylamide in a variety of paper grades to provide paper with dry and temporary wet strength. For instance, glyoxalated polyacrylamide can increase the initial wet strength of many household tissues that come into contact with water during their use. Wet strength resins applied to paper are either of the "permanent" or "temporary" type; there terms relate to how long the paper retains its wet strength after immersion in water. Wet strength retention is a desirable property for some paper products. However, paper products with permanent wet strength retention may be degradable only under severe conditions, therefore, wet strength retention can pose a disposal problem for such paper products. Accordingly, temporary wet strength resins are desirable for sanitary or disposable paper uses for which initial wet strength followed by decay of the wet strength is desirable.

Methods for preparing glyoxalated polyacrylamide polymers for use as temporary wet strength resins are known in the art. US Pat. No. 3,556,932 discloses the synthesis and use of ionic water-soluble vinylamide polymers which are thermosetting due to a reacted content of glyoxal. US Pat. No. 3,556,932 discloses polyacrylamide polymers having, prior to glyoxalation, a molecular weight in the range of 7,000 to 20,000 Dalton. The glyoxalated polymers, when applied to paper, are said to impart wet strength to paper, and the resulting paper is said to possess the property of losing a part of its wet strength when soaked in water for a moderate length of time. Specifically, it is shown that paper made with the disclosed glyoxalated copolymers lose about 50% of their initial wet strength after being wetted for 30 minutes.

US Pat. No. 4,605,702 discloses the synthesis and use of glyoxalated copolymers as temporary wet strength additives in papermaking. The copolymers of US Pat. No. 4,605,702, which are produced from acrylamide and a cationic comonomer, have a molecular weight (before glyoxalation) of about 500 to about 6000. Exemplified polymers range from 1700 to 5520 Dalton molecular weight (prior to glyoxalation). US Pat. No. 4,605,702 teaches that paper products produced with the glyoxalated copolymers, upon immersion in neutral water at room temperature, exhibit wet strength losses of greater than 60%. Wet strength loss for paper products prepared from the exemplified polymers ranges from 63.5 to 75.6% after soaking in neutral water for 16 hours. The copolymers of US Pat. No. 4,605,702 are asserted to be distinguished over the US Pat. No. 3,556,932 copolymers, because the wet strength imparted by the glyoxalated copolymers of US Pat. No. 4,605,702 decays more quickly as compared to the glyoxalated copolymers disclosed in US Pat. No. 3,556,932. US Pat. No. 4,605,702 attributes the difference in performance of these materials to differences in molecular weight of the copolymers before glyoxalation, where a lower molecular weight as used in US Pat. No. 4,605,702, is shown to provide a faster rate of wet strength decay.

A drawback of the glyoxalated copolymers disclosed in US Pat. No. 4,605,702 is that their efficiency in building initial wet strength is significantly lower than the copolymers disclosed in US Pat. No. 3,556,932. Data presented in US Pat. No. 4,605,702 illustrates that that disclosed glyoxalated copolymers must be added at a dosage of twofold to fourfold the dosage of the US Pat. No. 3,556,932 glyoxalated copolymer to achieve the same level of initial wet strength in the paper product.

U.S. Pat. No. 7,727,359 discloses a thermosetting resin comprising a mixture of reaction products of a firs partially glyoxalated polyacrylamide backbone, a second polyacrylamide backbone and a glyoxal component. The resin is asserted to produce fibrous substrates having temporary wet tensile properties of the same order of magnitude as those disclosed in US Pat. No. 4,605,702, but dry tensile strength intermediate to both US Pat. Nos. 3,556,932 and 4,605,702.

EP2386580A2 discloses a substantially aqueous glyoxalated-polyvinylamide thermosetting polymer composition comprising a reaction product of a vinylamide polymer and glyoxal wherein the vinylamide polymer has an average molecular weight of at least about 30,000 to at least about 5,000,000 wherein at least 40 wt. % of the total glyoxal has been consumed and contains substantially no organic liquid.

The prior art thus shown that the decay rate of wet strength is inversely proportional to the molecular weight of the starting polymer, so that high rates of decay are only obtainable with low molecular weight starting polymers. Thus, to produce glyoxalated copolymer additives that exhibit a high rate of wet strength decay rate, prior art processes are limited to the use of low molecular weight cationic acrylamide starting polymers. However, it has also been shown that efficiency of building wet strength is also inversely proportional to the molecular weight of the starting polymer used, such that low the molecular weight polymers result in additives with poor efficiency of building wet strength.

There remains an on-going unmet need in the art for wet strength polymers with improved properties for use in paper products, such as toilet paper, facial tissue, paper toweling and the like. The present disclosure addresses this need.

## SUMMARY

The following summary is not an extensive overview. It is intended to neither identify key or critical elements of the various embodiments, nor delineate their scope.

The present disclosure is directed to glyoxalated vinylamide polymers with high wet strength decay properties, which also exhibit a high efficiency of wet strength build. The glyoxalated vinylamide polymers are prepared by a process using high molecular weight cationic vinylamide copolymers resulting in a composition comprising glyoxalated vinylamide polymer in an aqueous medium. The glyoxalated vinylamide copolymer composition advantageously impart to a paper product comprising the glyoxalated vinylamide copolymer a unique combination of a high wet strength decay along with building wet strength with a high level of efficiency. A method of preparing the glyoxalated vinyl amide copolymers is provided, as well as methods of their use.

Provided is a cellulose reactive glyoxalated copolymer composition comprising an aqueous medium and about 0.1 to about 4 weight %, about 0.25 to about 4 weight %, about 1 to about 3 weight %, or about 1.5 to 2.5 weight % of a cellulose reactive glyoxalated vinylamide copolymer, based on the total weight of the aqueous medium, wherein: the glyoxalated vinylamide copolymer is obtained by reaction in an aqueous reaction medium of glyoxal and a cationic vinylamide copolymer; a dry weight of glyoxal:cationic copolymer in the aqueous reaction medium ranging from about 5 to about 40 glyoxal to about 95 to about 60 cationic vinylamide copolymer, about 10 to about 30 glyoxal to about 90 to about 70 cationic vinylamide copolymer, from about 20 to about 25 glyoxal to about 80 to about 75 cationic vinylamide copolymer, or about 23 glyoxal to about 77 cationic vinylamide copolymer; the aqueous reaction medium having a total solids concentration of from about 0.3 to about 3.0%, from about 0.5 to about 2.5%, from about 0.65% to about 2%, from about 0.75% to about 2%, from about 0.75 to about 1.5%, or from about 0.75 to about 1%; the cationic vinylamide copolymer having a weight average molecular weight of about 15,000 Daltons to about 46,100 Daltons, greater than 20,000 Daltons to about 46,100 Daltons, greater than 20,000 Daltons to about 25,000 Daltons, or about 20,500 Daltons, based on total weight of the cationic vinylamide copolymer before reaction with glyoxal, and comprised of about 5 to about 95 weight % diallyldimethyl ammonium halide monomer and about 95 to about 5 weight % acrylamide monomer, about 5 to about 25 weight % diallyldimethylammonium halide monomer and about 95 to about 75 weight % acrylamide monomer, about 5 to about 15 weight % diallyldimethylammonium halide monomer and about 95 to about 55 weight % acrylamide monomer, about 7.5 to about 92.5 weight % diallyldimethylammonium halide monomer and about 92.5 to about 7.5 weight % acrylamide monomer, about 10 to about 90 weight % diallyldimethylammonium halide monomer and about 90 to about 10 weight % acrylamide monomer, about 15 to about 85 weight % diallyldimethylammonium halide monomer and about 85 to about 15 weight % acrylamide monomer, about 20 to about 60 weight % diallyldimethylammonium halide monomer and about 80 to about 40 weight % acrylamide monomer, or about 20 to about 40 weight % diallyldimethylammonium halide monomer and about 80 to about 60 weight % acrylamide monomer, based on the total weight of the cationic copolymer before glyoxalation.

Provided is the cellulose reactive glyoxalated copolymer composition comprising an aqueous medium and about 0.1 to about 4 weight % of a cellulose reactive glyoxalated vinylamide copolymer, based total weight of the aqueous medium, wherein the glyoxalated vinylamide copolymer is obtained by reaction in an aqueous reaction medium of glyoxal and a cationic vinylamide copolymer, a dry weight of glyoxal: cationic copolymer in the aqueous reaction medium ranging from about 5 to about 40 glyoxal to about 95 to about 60 cationic vinylamide copolymer, the aqueous reaction medium having a total solids concentration of from about 0.3 to about 3.0%, the cationic vinylamide copolymer having a weight average molecular weight of about 15,000 Daltons to about 46,100 Daltons based on total weight of the cationic vinylamide copolymer before reaction with glyoxal, and comprised of about 5 to about 95 weight % diallyldimethyl ammonium halide monomer and about 95 to about 5 weight % acrylamide monomer, based on the total weight of the cationic copolymer before glyoxalation.

Provided is a method for preparing a cellulose reactive glyoxalated copolymer composition comprising: reacting a substantially aqueous reaction mixture of a cationic vinylamide copolymer and glyoxal at a dry weight of glyoxal:cationic copolymer in the aqueous reaction medium ranging from about 5 to about 40 glyoxal to about 95 to about 60 cationic vinylamide copolymer, the aqueous reaction medium having a total solids concentration of from about 0.3 to about 3.0%, the cationic vinylamide copolymer having a weight average molecular weight of about 15,000 Daltons to about 46,100 Daltons based on total weight of the cationic vinylamide copolymer before reaction with glyoxal and comprising about 5 to about 95 weight % diallyldimethyl ammonium halide monomer and about 95 to about 5 weight % acrylamide monomer, based on the total weight of the cationic copolymer before glyoxalation and at a reaction pH of 8.5 to 12. A cellulose reactive glyoxalated copolymer composition prepared by this method is also provided.

Further provided is a method of making paper comprising one of: (a) combining the glyoxalated copolymer composition of the disclosure and cellulose fibers; or (b) applying the glyoxalated composition of the disclosure to a wet or dry paper.

A paper strength additive or coating comprising the glyoxalated copolymer composition of the disclosure is provided. Further provided is a coated with or comprising the glyoxalated copolymer composition of the disclosure.

It is to be understood that both the foregoing general description and the following detailed description are exemplary and explanatory and are intended to provide further explanation of the disclosed compounds, compositions, and methods.

## DESCRIPTION

There remains a need for wet strength polymers with improved properties for use in paper products, such as toilet paper, facial tissue, paper toweling, and the like. The present disclosure addresses this need by provision of wet strength glyoxalated acrylamide polymers with high wet strength decay properties, which also exhibit a high efficiency of wet strength build, and a method for preparing same.

Glyoxalated acrylamide copolymers made by the disclosed process exhibit wet strength decay that is substantially equal to that achieved with copolymers disclosed in US Pat. No. 4,605,702, and additionally, the efficiency of initial wet strength development from the disclosed copolymers of the disclosed process is markedly higher than that demonstrated by the US Pat. No. 4,605,702 copolymers. Further, the efficiency of wet strength development of the glyoxalated acrylamide copolymers prepared by the disclosed process is also higher than that of copolymers disclosed in US Pat. No. 3,556,932.

Methods of using the wet strength glyoxalated acrylamide copolymers in paper products is provided, along with the paper products so made.

## DEFINITIONS

As used herein, each of the following terms has the meaning associated with it in this section. Additional definitions are present throughout the disclosure.

The articles "a" and "an" are used herein to refer to one or to more than one (i.e., to at least one) of the grammatical object of the article. By way of example, "an element" means one element or more than one element.

The term "about" will be understood by persons of ordinary skill in the art and will vary to some extent depending on the context in which it is used. As used herein, the term "about" means that the number being described can deviate by plus or minus five percent of the number. For example, "about 250 g" means from 237.5-262.5 g. When the term "about" is used in a range, then the lower limit may be as much as minus 5% of the lower number and the upper limit may extend up to plus 5% of the upper number. For example, a range of about 100 to about 200 g indicates a range that extends from as low as 95g up to 210 g.

Ranges: throughout this disclosure, various aspects of the disclosure can be presented in a range format. It should be understood that the description in range format is merely for convenience and brevity and should not be construed as an inflexible limitation on the scope of the disclosure. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 2.7, 3, 4, 5, 5.3, and 6. This applies regardless of the breadth of the range.

For the purposes of this disclosure, the product of the methods for preparing a cellulose reactive functionalized polyvinylamide adduct comprising reacting a substantially aqueous reaction mixture of vinylamide copolymer and a cellulose reactive agent is referred to interchangeably as "adduct", "formed adduct", or "cellulose reactive functionalized polyvinylamide adduct."

The term "cellulose reactive agent" refers to a compound that contains two or more functional groups capable of forming covalent bonds with cellulose, for example, a dialdehyde. Glyoxal and glutaraldehyde are exemplary dialdehydes.

The terms "vinylamide" and "acrylamide" as used herein refer to any vinyl monomer containing an amide functionality including but not limited to acrylamide, methacrylamide, N-methyl acrylamide, or any other substituted acrylamide.

The terms "starting vinylamide copolymer," "starting acrylamide copolymer," "backbone vinylamide copolymer," and "backbone acrylamide copolymer" refer to a polymer comprising vinyl monomers used in the preparation of a cellulose reactive functionalized polyvinylamide adduct.

The term "copolymer" refers to a polymer formed from two or more monomers.

The term "cationic copolymer" refers to the starting vinylamide copolymer before glyoxalation. Cationic copolymers can include non-ionic and anionic monomer provided the aggregate charge of the copolymer is cationic.

For the purposes of this disclosure, the reaction of the pendant amide groups of the starting vinylamide copolymers with glyoxal (a type of a cellulose reactive agent) is referred to as a "glyoxalation reaction" or simply "glyoxalation." The product of the glyoxalation reaction is referred to interchangeably as "glyoxalated polyvinylamide," "glyoxalated polyacrylamide," "glyoxalated polyvinylamide copolymer," "glyoxalated polyacrylamide polymer," "glyoxalated polyvinylamide adduct," and "glyoxalated polyacrylamide adduct."

As used herein, "G-PAM" or "g-pam" is an abbreviation for glyoxalated polyacrylamide polymer.

The term "aqueous medium" or "aqueous reaction medium" refers to water or water comprising solvent, oils, and/or trace impurities. Weights expressed in terms of "based on total weight of the aqueous medium" refer to the weight of the water or water comprising solvent, oils, and/or trace impurities, and does not include the weight of additives, such as catalysts and reactants.

The term "substantially aqueous reaction mixture" refers to adduct formation carried out under conditions where the presence of organic oils does not exceed the weight of vinylamide polymer. For instance, adduct formation may be carried out under conditions where the total weight of the organic oils is less than 50 wt. % of the vinylamide polymer, is less than about 20 wt. % of the vinylamide polymer, less than 10 wt. % of the vinylamide polymer, less than about 5 wt. % of the vinylamide polymer, or less than about 1 wt. % of the vinylamide polymer. Alternatively, the substantially aqueous reaction medium is oil free.

The "total solids concentration" of the glyoxalation reaction mixture refers to "wt. % of the vinylamide copolymer and glyoxal" before the reaction (i.e., before adduct formation) and is defined as follows:

$$Wt.\% \ total \ solids \ = \frac{mass \ of \ the \ vinylamide \ copolymer \ and \ glyoxal}{mass \ of \ the \ glyoxalation \ reaction \ mixture} \quad \text{Eq. 1}$$

wherein the "mass of the glyoxalation reaction mixture" includes the solvents.

"Wt. % glyoxal consumed" is based on total weight of glyoxal charged.

"Molecular weight" as used in this disclosure refers to the mean weight average molecular weight (Mw). Unless otherwise noted, all molecular weight is measured in units of Daltons. Molecular weight can be determined by standard methods such as gel permeation chromatography (GPC). For example, the weight average molecular weight may be determined by conventional calibration techniques using acetate buffer and the following hydrophilic polyhydroxyl columns: two (2) PL Aquagel-OH MIXED columns (7.5 mm x 300 mm, 8 micron) used in series, and a PL Aquagel-OH Guard column (7.5mm x 50 mm, 8 micron). All of these columns are available from Agilent Technologies. Polyethylene oxide and polyethylene glycol standards may be used to calibrate the three column set.

The terms "concentration of vinylamide copolymer" and "concentration of acrylamide copolymer" refer to the concentration of the starting copolymer before reaction with the cellulose reactive agent (i.e., before adduct formation).

As used herein, "initial wet strength development," "efficiency of wet strength development," and "wet strength build" refer to the quantification of wet strength imparted to paper resulting from the addition of a wet strengthening polymer additive. Initial wet strength as used herein can be measured by the standardized measurement technique described in the Examples.

As used herein, "temporary wet strength" and "wet strength decay" refer to the change in residual wet strength imparted to paper resulting from the addition of a wet strengthening polymer additive, as a function of the amount of time that the paper has been re-wetted. For instance, a "5 minute wet strength decay" refers to the wet strength decay determined after the paper has been re-wetted for 5 minutes. Wet strength decay can be assessed by the measurement technique described in the Examples.

As envisioned in the present disclosure with respect to the disclosed compositions of matter and methods, in one aspect, the embodiments of the disclosure comprise the components and/or steps disclosed therein. In another aspect, the embodiments of the disclosure consist essentially of the components and/or steps disclosed therein. In yet another aspect, the embodiments of the disclosure consist of the components and/or steps disclosed therein.

## DETAILED DESCRIPTION

The present disclosure provides a cellulose reactive glyoxalated vinylamide copolymer, as well as a composition comprising an aqueous medium containing the glyoxalated vinylamide copolymer. Disclosed herein is a process for glyoxalating acrylamide copolymers found unexpectedly to enable the use of relatively high molecular weight (molecular weight measured prior to glyoxalation) copolymers in paper product, while still providing a high rate of wet strength decay over time in the paper product. A combination of: 1) starting vinylamide copolymer molecular weight; 2) vinylamide copolymer concentration in a reaction solution; 3) ratio of cationic acrylamide polymer to dialdehyde cross-linker ; and 4) reaction pH, have been found to provide this unique combination of properties of high wet strength efficiency and high wet strength decay over time. Features of the disclosed process include using starting acrylamide copolymers with molecular weight in the range of 15,000 to 46,100 Daltons, reacting the starting vinylamide copolymers with glyoxal at a total solids concentration (weight % of starting copolymer and glyoxal in reaction mixture) between 0.3 and 3.0%, a dry weight range of 95:5 to 60:40 (copolymer:glyoxal), and running the glyoxalation reaction at a pH between 8.5 and 12. The reaction can be run for a time of from 10 to 300 minutes.

**Starting copolymer**

The starting vinylamide copolymers that are used in adduct formation (such as glyoxalation) can be obtained by methods of polymer synthesis known to those skilled in the art, such as free radical or redox catalysis polymerization of a vinylamide monomer, and one or more co-monomers. The vinylamide copolymer is cationic. Cross-linking agents with multiple polymerizable vinyl functionalities can also be included in the formulations to impart structure to the backbone polymer. A chain transfer agent, such as sodium hypophosphite, can be used to control the molecular weight of the polymer molecules, as well as to introduce branching.

The cationic copolymer before glyoxalation has a weight average molecular weight of about 15,000 to about 46,100 Daltons, including about 15,000 to about 40,000 Daltons, about 15,000 to about 35,000 Daltons, about 15,000 to about 30,000 Daltons, about 15,000 to about 25,000 Daltons; about 20,000 to about 46,100 Daltons, including about 20,000 to about 40,000 Daltons, about 20,000 to about 35,000 Daltons, about 20,000 to about 30,000 Daltons, about 20,000 to about 25,000 Daltons; or greater than 20,000 to about 46,100 Daltons, including greater than 20,000 to about 40,000 Daltons, greater than 20,000 to about 35,000 Daltons, greater than 20,000 to about 30,000 Daltons, or greater than 20,000 to about 25,000 Daltons. An exemplary cationic copolymer has a molecular weight before glyoxalation of greater than 20,000 to about 46,100 Daltons, about 20,500 Daltons or about 46,100 Daltons.

The cationic copolymer for glyoxalation is a cationic copolymer comprising at least two different monomer units: vinylamide, *e.g.*, acrylamide monomer, and a diallyldimethylammonium halide monomer. An exemplary cationic copolymer comprises vinylamide monomer and diallyldimethylammonium halide monomer, or contains only vinylamide monomer and diallyldimethylammonium halide monomer. The halide of the diallyldimethylammonium halide monomer can include bromine (Br), chlorine (Cl), iodine (I), or fluorine (F). An exemplary diallyldimethylammonium halide monomer is diallyldimethylammonium chloride (DADMAC).

The cationic copolymer comprises about 5 to about 95 weight % diallyldimethylammonium halide monomer and about 95 to about 5 weight % acrylamide monomer, about 7.5 to about 92.5 weight % diallyldimethylammonium halide monomer and about 92.5 to about 7.5 weight % acrylamide monomer, about 10 to about 90 weight % diallyldimethylammonium halide monomer and about 90 to about 10 weight % acrylamide monomer, about 15 to about 85 weight % diallyldimethylammonium halide monomer and about 85 to about 15 weight % acrylamide monomer, about 20 to about 60 weight % diallyldimethylammonium halide monomer and about 80 to about 40 weight % acrylamide monomer, or about 20 to about 40 weight % diallyldimethylammonium halide monomer and about 80 to about 60 weight % acrylamide monomer, based on total weight of the cationic copolymer before glyoxalation. An exemplary cationic copolymer comprises about 5 to about 25 weight % diallyldimethylammonium halide monomer and about 95 to about 75 weight % acrylamide monomer, or about 5 to about 15 weight % diallyldimethylammonium halide monomer and about 95 to about 55 weight % acrylamide monomer.

The cationic copolymer can include one, two, three, or more cationic, non-cationic, or anionic monomer units. Cationic copolymers can include non-ionic and anionic monomer provided the aggregate charge of the copolymer is cationic.

Suitable cationic monomers or potentially cationic monomers include diallyldialkyl amines, 2-vinylpyridine, 2-(dialkylamino)alkyl(meth)acrylates, dialkylamino alkyl(meth) acrylamides, including acid addition and quaternary ammonium salts thereof. Specific examples of such cationic monomers or potentially cationic monomers are (meth)acryloyloxy ethyl trimethylammonium chloride (dimethyl amino ethyl(meth)acrylate, methyl chloride quaternary salt), 2-vinyl-N-methylpyridinium chloride, (p-vinylphenyl)-trimethylammonium chloride, (meth)acrylate 2-ethyltrimethylammonium chloride, 1-methacryloyl-4-methyl piperazine, Mannich polyacrylamides i.e., polyacrylamide reacted with dimethylamine formaldehyde adduct to give the N-(dimethyl amino methyl) and (meth)acrylamido propyltrimethyl ammonium chloride.

Suitable anionic monomers can be selected from vinyl acidic material such as acrylic acid, methacrylic acid, maleic acid, allyl sulfonic acid, vinyl sulfonic acid, itaconic acid, fumaric acid, potentially anionic monomers such as maleic anhydride and itaconic anhydride and their alkali metal and ammonium salts, 2-acrylamido-2-methylpropanesulfonic acid and its salts, sodium styrene sulfonate and the like.

Suitable non-ionic monomers other than the vinylamide can be selected from the group consisting of (meth) acrylic esters such as octadecyl(meth)acrylate, ethyl acrylate, butyl acrylate, methylmethacrylate, hydroxyethyl(meth)acrylate and 2-ethylhexylacrylate; N-alkyl acrylamides, N-octyl(meth)acrylamide, N-tert-butyl acrylamide, N-vinylpyrrolidone, N,N- dialkyl(meth)acrylamides such as N,N'-dimethyl acrylamide; styrene, vinyl acetate, hydroxy alkyl acrylates and methacrylate such as 2-hydroxy ethyl acrylate and acrylonitrile.

The cationic copolymer can be crosslinked, branched or otherwise structured or linear. For example, the cationic copolymer can be linear, crosslinked, chain-transferred, or crosslinked & chain-transferred (structured).

Crosslinking agents are usually polyethylenically unsaturated crosslinking agents. Examples are methylene bis(meth)acrylamide, triallylammonium chloride; tetraallyl ammonium chloride, poly(ethylene glycol) diacrylate; poly(ethylene glycol) dimethacrylate; N-vinyl acrylamide; divinylbenzene; tetra(ethylene glycol) diacrylate; dimethylallylaminoethylacrylate ammonium chloride; diallyloxyacetic acid, Na salt; diallyloctylamide; trimethyllpropane ethoxylate triacryalte; N-allylacrylamide N-methylallylacrylamide, pentaerythritol triacrylate and combinations thereof. Other systems for crosslinking can be used instead of or in addition to these. For instance, covalent crosslinking through pendant groups can be achieved by the use of ethylenically unsaturated epoxy or silane monomers, or by the use of polyfunctional crosslinking agents such as silanes, epoxies, polyvalent metal compounds or other known crosslinking systems.

**Total Solids Concentration in reaction solution**

The glyoxalation reaction of the polyvinylamide is carried out at concentrations of the polyvinylamide where gelation is prevented. Moreover, in the method of the disclosure, the total solids concentration (total solids being weight of starting vinylamide copolymer and glyoxal) of the reaction solution is about 0.3 to about 3% by weight total solids, at about 0.5 to about 2.5% by weight total solids, at about 0.65 to about 2% by weight total solids, at about 0.75 to about 2% by weight total solids, at about 0.75 to about 1.5% by weight total solids, or at about 0.75 to about 1% by weight total solids. An exemplary total solids concentration in the glyoxalation reaction solution is about 1%.

**Ratio of cationic starting acrylamide polymer to dialdehyde cross-linker**

The glyoxalated copolymer is obtained by reaction in an aqueous reaction medium of a dry weight ratio of glyoxal: cationic copolymer ranging from about 5 to about 40 glyoxal to about 95 to about 60 cationic copolymer (i.e., about 5:95 to about 40:60), including from about 10 to about 30 glyoxal to about 90 to about 70 cationic copolymer (i.e., about 10:90 to about 30:70), including from about 20 to about 25 glyoxal to about 80 to about 75 cationic copolymer (i.e., about 20:80 to about 25:75). The weight percent of glyoxal and cationic polymer is based on the total weight of the dry reactants before the glyoxalation step.

An exemplary aqueous reaction medium contains 0.77% by weight copolymer solids, 0.23% by weight glyoxal on a dry basis, and 99% deionized water, corresponding to a dry weight ratio of glyoxal:cationic copolymer of 23:77.

**Reaction pH**

Base addition or changing the pH to above 7 is the most common method of catalyzing the glyoxalation reaction. In the method of the disclosure, the reaction pH is a pH of 8.5 to 12, a pH 9 to 11.5, a pH of 9.5 to 11, or a pH of 9.5 to 10.5. An exemplary pH for the reaction is 10.5.

The duration of the reaction necessary to obtain the desired product (*e.g.,* 0.1 to 4 wt. % glyoxalated copolymer or 0.25 to 4 wt. % glyoxalated copolymer in the aqueous composition) will vary depending on concentration, temperature and pH, as well as other factors known in the art to affect the rate of glyoxalation. The glyoxalation reaction of the present disclosure is run for 10 to 300 minutes, 25 to 250 minutes, 50 to 200 minutes, 100 to 200 minutes, or 100 to 150 minutes. An exemplary reaction time is 120 minutes.

The glyoxalation reaction is carried out at a temperature ranging from 15 to 35°C, from 20 to 30°C, or from 20 to 25°C. An exemplary reaction temperature is 20°C.

The glyoxalation reaction can be carried out in batch or continuous mode. For instance, the reaction can be carried out in a in a continuous reactor with pH measurement capability at the papermaking site.

Conventional additives which can be added to the glyoxalation reaction are chelating agents to remove polymerization inhibitors, pH adjusters, initiators, buffers, surfactants or combinations thereof. The disclosed process can be practiced without any one or all of such conventional additives.

**Monitoring of Glyoxalated Copolymer Formation**

Viscosity is typically measured during the reaction using the UL adapter for a BROOKFIELD LV series viscometer. The UL adapter has no spindle number. Only one setting is possible. The base of the adapter cup is removed and the assembly is placed directly into the reaction mixture. Viscosity measurements are automatically recorded every second during the length of the catalyzed reaction. The viscometer is set to a speed of 60 rpm and the temperature of the reaction mixture is maintained at 25° C.

The glyoxalated copolymer formation may also be monitored by monitoring the consumption of glyoxal using methods known in the art. For example, one such method may include the method disclosed by Mitchel, R.E.J, et al. "The use of Girard-T reagent in a rapid and sensitive method for measuring glyoxal and certain other odicarbonyl compounds," Analytical Biochemistry, Volume 81, Issue 1 , July 1977, Pages 47-56. The percent residual glyoxal can be determined from 2 wt. % aqueous solutions of the glyoxalated polyvinylamides. Residual glyoxal is removed from the glyoxalated polymer by dialysis through a 3500 MWCO membrane tubing. Ten milliliters (ml) of dialyzed sample is derivatized by adding 2.0 ml of o-(2,3,4,5,6 Pentafluorobenzyl)-hydroxyamine hydrochloride (6.6 mg/ml) for approximately 2 hours. The glyoxal is then extracted from the dialysis solution using 1:1 hexane-diethyl ether. Analysis of the extract can be completed by gas chromatography on an HP 5890 Gas Chromatograph (GC) #6 instrument using a DB-5 15m, 0.53mm i.d., 1.5μm df (column length, internal diameter, and film thickness, respectively) column. Once the residual glyoxal is determined and the amount of pre-reaction glyoxal is known, the percent glyoxal consumed can be calculated.

**Glyoxalated copolymer composition**

The glyoxalated copolymer composition of the disclosure contains the glyoxalated copolymer in an amount of about 0.1 to about 4 weight %, including about 0.25 to about 4 weight %, about 1 to about 3 weight %, or about 1.5 to 2.5 weight %, based on total weight of the aqueous medium. When the amount of glyoxalated copolymer in the glyoxalated copolymer composition exceeds about 4 weight %, then gelation becomes a problem.

The glyoxalated copolymer composition of the disclosure is a thermosetting resin. The glyoxalated copolymer composition can comprise more than one type of glyoxalated vinylamide copolymer or one or more other glyoxalated polymers useful for temporary wet strength paper applications. Alternatively, the glyoxalated copolymer composition of the disclosure contains substantially only the glyoxalated copolymer of the disclosure as the polymeric thermosetting resin component.

The glyoxalated copolymer composition has a viscosity of equal to or less than 100 centipoise (cP), a viscosity from about 5 to about 100 cP, a viscosity less than or equal to 30 cP, a viscosity from about 30 to about 5 cP, a viscosity from about 25 to about 10 cP, a viscosity less than or equal to 25 cP, or a viscosity less than 25 to about 5 cP, as measured using a Brookfield viscometer, wherein 1 cP corresponds to 1 mPa.s.

The disclosure provides a cellulose reactive glyoxalated copolymer composition comprising an aqueous medium and about 0.1 to about 4 weight %, about 0.25 to about 4 weight %, about 1 to about 3 weight %, or about 1.5 to 2.5 weight % of a cellulose reactive glyoxalated vinylamide copolymer, based on the total weight of the aqueous medium, wherein: the glyoxalated vinylamide copolymer is obtained by reaction in an aqueous reaction medium of glyoxal and a cationic vinylamide copolymer; a dry weight of glyoxal:cationic copolymer in the aqueous reaction medium ranging from about 5 to about 40 glyoxal to about 95 to about 60 cationic vinylamide copolymer, about 10 to about 30 glyoxal to about 90 to about 70 cationic vinylamide copolymer, from about 20 to about 25 glyoxal to about 80 to about 75 cationic vinylamide copolymer, or about 23 glyoxal to about 77 cationic vinylamide copolymer; the aqueous reaction medium having a total solids concentration of from 0.3 to 3.0%, from 0.5 to 2.5%, from 0.65% to 2%, from 0.75% to 2%, 0.75 to 1.5%, or from 0.75 to 1%; the cationic vinylamide copolymer having a weight average molecular weight of about 15,000 Daltons to about 46,100 Daltons, greater than 20,000 Daltons to about 46,100 Daltons, greater than 20,000 Daltons to about 25,000 Daltons, or about 20,500 Daltons, based on total weight of the cationic vinylamide copolymer before reaction with glyoxal, and comprised of about 5 to about 95 weight % diallyldimethyl ammonium halide monomer and about 95 to about 5 weight % acrylamide monomer, about 5 to about 25 weight % diallyldimethylammonium halide monomer and about 95 to about 75 weight % acrylamide monomer, about 5 to about 15 weight % diallyldimethylammonium halide monomer and about 95 to about 55 weight % acrylamide monomer, about 7.5 to about 92.5 weight % diallyldimethylammonium halide monomer and about 92.5 to about 7.5 weight % acrylamide monomer, about 10 to about 90 weight % diallyldimethylammonium halide monomer and about 90 to about 10 weight % acrylamide monomer, about 15 to about 85 weight % diallyldimethylammonium halide monomer and about 85 to about 15 weight % acrylamide monomer, about 20 to about 60 weight % diallyldimethylammonium halide monomer and about 80 to about 40 weight % acrylamide monomer, or about 20 to about 40 weight % diallyldimethylammonium halide monomer and about 80 to about 60 weight % acrylamide monomer, based on the total weight of the cationic copolymer before glyoxalation, wherein the acrylamide monomer is acrylamide, methacrylamide, N-methyl acrylamide, or a substituted acrylamide

**Use of Glyoxalated copolymer composition**

The glyoxalated copolymer composition of the disclosure is useful as a high molecular weight temporary wet strength resin additive for paper. Accordingly, the present disclosure further provides a method of making paper, which includes a step of combining a glyoxalated copolymer composition of the disclosure and cellulosic fiber slurry or applying a glyoxalated copolymer composition to a wet/dry web paper. In the method of making paper, the sequence in which the cellulose fibers are combined with the glyoxalated copolymer composition is not particularly limited. For example, the method can include adding the glyoxalated copolymer composition to an aqueous suspension of cellulose fibers; adding cellulose fibers to the glyoxalated copolymer composition; adding the glyoxalated copolymer composition and cellulose fibers to an aqueous solution; and/or reacting in an aqueous reaction medium comprising cellulose fibers a dry weight ratio of glyoxal:cationic copolymer ranging from about 5:95 to about 40:60 to form the glyoxalated copolymer, wherein the glyoxalated copolymer is about 0.1 to about 4 weight % based on total weight of the aqueous reaction medium. Thus, the disclosure provides a method for preparing paper with improved wet strength properties comprising the steps of: a) providing an aqueous slurry of cellulosic fibers; b) adding the glyoxalated copolymer composition of the disclosure to the aqueous slurry; c) forming a web from the aqueous slurry formed in step b); and d) drying the web, to form a paper product having improved efficiency of initial wet strength development as well as increased wet strength decay over time.

The glyoxalated copolymer composition can be added to the thick or thin stock. When added to the thin stock, it may be added before the fan pump. A substantial amount of wet strength is imparted when as little as about 0.10 wt. % of the glyoxalated copolymer, based on dry fiber weight of the glyoxalated copolymer is added to the furnish. For example, suitable dosages include about 0.10 to about 40 (0.05-20 kg/metric ton) pounds dry polymer per ton of dry furnish, about 1 to about 20, (0.5-10 kg/metric ton), about 1 to about 10 (0.5- 5 kg/metric ton), about 1 to about 8 (0.5-4 kg/metric ton) pounds, or 1.5 to about 6 (1.0-3 kg/metric ton) pounds dry polymer per ton of dry furnish.

Application of the glyoxalated copolymer composition to wet/dry paper may be accomplished by any conventional means. Examples include but are not limited to size press, padding, spraying, immersing, printing or curtain coating. Accordingly, the disclosure also provides a method for providing paper with improved wet strength properties comprising the steps of: a) spraying, immersing, coating or otherwise applying glyoxalated copolymer composition of the disclosure onto a wet web or wet paper; and b) drying the coated wet web or wet paper, to form a paper product having improved efficiency of initial wet strength development as well as increased wet strength decay over time.

The disclosure includes a paper product containing a cellulose reactive glyoxalated copolymer composition comprising an aqueous medium and about 0.1 to about 4 weight %, about 0.25 to about 4 weight %, about 1 to about 3 weight %, or about 1.5 to 2.5 weight % of a cellulose reactive glyoxalated vinylamide copolymer, based on the total weight of the aqueous medium, wherein: the glyoxalated vinylamide copolymer is obtained by reaction in an aqueous reaction medium of glyoxal and a cationic vinylamide copolymer; a dry weight of glyoxal:cationic copolymer in the aqueous reaction medium ranging from about 5 to about 40 glyoxal to about 95 to about 60 cationic vinylamide copolymer, about 10 to about 30 glyoxal to about 90 to about 70 cationic vinylamide copolymer, from about 20 to about 25 glyoxal to about 80 to about 75 cationic vinylamide copolymer, or about 23 glyoxal to about 77 cationic vinylamide copolymer; the aqueous reaction medium having a total solids concentration of from 0.3 to 3.0%, from 0.5 to 2.5%, from 0.65% to 2%, from 0.75% to 2%, 0.75 to 1.5%, or from 0.75 to 1%; the cationic vinylamide copolymer having a weight average molecular weight of about 15,000 Daltons to about 46,100 Daltons, greater than 20,000 Daltons to about 46,100 Daltons, greater than 20,000 Daltons to about 25,000 Daltons, or about 20,500 Daltons, based on total weight of the cationic vinylamide copolymer before reaction with glyoxal, and comprised of about 5 to about 95 weight % diallyldimethyl ammonium halide monomer and about 95 to about 5 weight % acrylamide monomer, about 5 to about 25 weight % diallyldimethylammonium halide monomer and about 95 to about 75 weight % acrylamide monomer, about 5 to about 15 weight % diallyldimethylammonium halide monomer and about 95 to about 55 weight % acrylamide monomer, about 7.5 to about 92.5 weight % diallyldimethylammonium halide monomer and about 92.5 to about 7.5 weight % acrylamide monomer, about 10 to about 90 weight % diallyldimethylammonium halide monomer and about 90 to about 10 weight % acrylamide monomer, about 15 to about 85 weight % diallyldimethylammonium halide monomer and about 85 to about 15 weight % acrylamide monomer, about 20 to about 60 weight % diallyldimethylammonium halide monomer and about 80 to about 40 weight % acrylamide monomer, or about 20 to about 40 weight % diallyldimethylammonium halide monomer and about 80 to about 60 weight % acrylamide monomer, based on the total weight of the cationic copolymer before glyoxalation, wherein the acrylamide monomer is acrylamide, methacrylamide, N-methyl acrylamide, or a substituted acrylamide.

The disclosure includes a paper product containing the glyoxalated copolymer composition, wherein the glyoxylated copolymer is the reaction product form by reacting a substantially aqueous reaction mixture of a cationic vinylamide copolymer and glyoxal at a dry weight of glyoxal:cationic copolymer in the aqueous reaction medium ranging from about 5 to about 40 glyoxal to about 95 to about 60 cationic vinylamide copolymer, the aqueous reaction medium having a total solids concentration of from 0.3 to 3.0%, the cationic vinylamide copolymer having a weight average molecular weight of about 15,000 Daltons to about 46,100 Daltons based on total weight of the cationic vinylamide copolymer before reaction with glyoxal and comprising about 15 to about 85 weight % diallyldimethyl ammonium halide monomer and about 85 to about 15 weight % acrylamide monomer, based on the total weight of the cationic copolymer before glyoxalation and at a reaction pH of 8.5 to 12.

## EXAMPLES

The products, compositions, and methods of making and using are further described in detail by reference to the following experimental examples. These examples are provided for purposes of illustration only, and are not intended to be limiting unless otherwise specified. Thus, the products, compositions, and methods of the disclosure should in no way be construed as being limited to the following examples, but rather, should be construed to encompass any and all variations which become evident as a result of the teaching provided herein.

**Example 1 Synthesis and Glyoxalation of Starting Copolymer Backbones**

A cationic copolymer containing 8.6 weight % diallyldimethylammonium chloride monomer and 91.4 weight % acrylamide were prepared as follows.

A suitable one liter reaction vessel, equipped with a reflux condenser, overhead stirrer, thermocouple, and nitrogen sparge, was charged with 253.4 parts of water, 21.8 parts of 63.5% diallyldimethylammonium chloride, 0.91 parts adipic acid, 1.75 parts sodium hypophosphite, and 2.1 parts ammonium persulfate. The reactor contents were heated to 30°C and sparged with nitrogen for 30 minutes. Next, two continuous feeds - Feed One and Feed Two - were started simultaneously, each lasting for 120 minutes. Feed One contained a mixture of 276.5 parts of 53% acrylamide, 77 parts of deionized water, 0.32 parts of potassium bromate, and 2.17 parts of CHEL® DPTA-41 (BASF Corporation, New Jersey; aqueous solution of pentasodium diethylenetriamine-pentaacetate). Feed Two contained 1.4 parts of sodium bisulfite, 15 parts deionized water, and 1.75 parts of sodium hypophosphite. Once the two feeds were started, an exotherm ensued, and the temperature of the reactor contents rose to 75°C, and was maintained at this temperature for the remainder of the reaction by applying cooling or heating to the system as needed. After 120 minutes, and the feeds were complete, the temperature of the reaction mass was raised to 85°C, and 2 parts of ammonium persulfate dissolved in 47 parts of deionized water was added to the reactor contents over a two minute period, which was followed by a 120 minute hold at 85°C. Finally, the polymer was cooled and collected. The resultant copolymer had a molecular weight of 20,500 Daltons (Copolymer A).

The procedure followed to produce Copolymer A was repeated two additional times, with the only change being the quantity of sodium hypophosphite added to the initial reactor charge and to the Feed Two.

When the sodium hypophosphite charge was 0.49 parts added separately to both the initial reactor charge and the Feed Two, then the resultant copolymer had a molecular weight of 46, 100 Daltons (Copolymer B).

When the sodium hypophosphite charge was 0.26 parts added separately to both the initial reactor charge and the Feed Two, then the resultant copolymer had a molecular weight of 79,400 Daltons (Comparative Copolymer C).

The copolymer backbones were then glyoxalated. A homogeneous glyoxalation reaction solution as made from deionized water, Copolymer A and 40% glyoxal, such that the reaction solution was 0.77% by weight copolymer solids, 0.23% by weight glyoxal on a dry basis and 99.0% deionized water. The total solids concentration of the reaction solution was 1%. Dropwise addition of a 5% sodium hydroxide solution was made to the glyoxalation solution, which was under continuous mixing, to raise the pH of the solution to 10.5, and the pH was held at 10.5 and temperature was held at 20°C for 120 minutes. At the end of 120 minutes, the pH was lowered to a solution pH of 3.5 by the dropwise addition of sulfuric acid. The final glyoxalated copolymer sample ("g-pam 1") was collected.

The same glyoxalation procedure as described above was followed to produce glyoxalated copolymers from Copolymer B and Comparative Copolymer C, which final products were collected and designated "g-pam 2" and "g-pam 3," respectively

## Example 2 Comparative Glyoxalated Copolymer 1

A sample of comparative prior art glyoxalated polyacrylamide was produced according to the method described in Example 1 of U.S. Pat. No. 4,605,702. The molecular weight (Mw) of this initial copolymer was 3,070 Daltons. The sample is designated herein as "Comparative g-pam 1."

## Example 3 Comparative Glyoxalated Copolymer 2

A second sample of comparative prior art g-pam is produced according to the method described in Example 1 of U.S. Pat. No. 3,556,932. The molecular weight (Mw) of this initial copolymer was 12,080 Daltons. The sample is designated herein as "Comparative g-pam 2."

## Example 4 Comparative Glyoxalated Copolymer 3

A third comparative g-pam was produced by glyoxalating a sample of Copolymer A (20,500 Daltons) from Example 1. Copolymer A was glyoxalated by the method set forth in Example 1 of U.S. Pat. No. 3,556,932. The final glyoxalated material was collected and is designated herein as "Comparative g-pam 3."

## Example 5 Paper Products

An aqueous, pulp slurry was synthesized from a 70:30 ratio of hardwood to softwood fibers, beaten to 380 Canadian Standard Freeness (CSF) and diluted to 0.5% consistency, with pH of 6.9. Aliquots of the pulp slurry were collected, placed under overhead stirring, and glyoxalated copolymer solutions were added to the pulp slurry to achieve final addition levels of 5, 10 and 20 pounds of g-pam (dry weight) per ton of oven dry pulp. Once addition of the g-pam to the pulp slurry was completed, the mixture was then stirred for 30 seconds to permit absorption of the g-pam onto the fiber in the aqueous pulp slurry. Each aliquot of pulp slurry with g-pam additive produced a 200 square centimeter round handsheet with a basis weight of 60 grams per square meter. The formed web was then pressed between paper blotters, and dried on a steam-heated rotary drum dryer at a temperature of 240°F to produce a handsheet.

Wet tensile strength of the finished paper was measured according to TAPPI Test Method T456. Each tensile strength value is the average of 3 measurements and reported in pounds per inch (lbf/in). The "5 minute Wet Tensile Strength" was determined by soaking the treated paper in water at pH 7.0 for 5 minutes and then measuring the wet tensile strength. The % Decay is calculated as (initial wet tensile strength - 5 minute wet tensile strength) / initial wet tensile strength. The results are set forth in Table 1.

Table 1

|  | Dosage | Initial Wet Tensile Strength (lbf/in) | 5 minute Wet Tensile Strength (lbf/in) | Wet Tensile Decay (%) |
|---|---|---|---|---|
| g-pam 1 | 5 lb/ton | 0.89 | 0.46 | 48.93% |
|  | 10 lb/ton | 1.39 | 0.87 | 37.66% |
|  | 20 lb/ton | 2.20 | 1.08 | 50.86% |
| Comparative g-pam 1 | 5 lb/ton | 0.49 | 0.26 | 47.36% |
|  | 10 lb/ton | 0.49 | 0.25 | 49.51% |
|  | 20 lb/ton | 0.68 | 0.37 | 46.02% |
| Comparative g-pam 2 | 5 lb/ton | 0.87 | 0.51 | 41.34% |
|  | 10 lb/ton | 1.11 | 0.63 | 43.23% |
|  | 20 lb/ton | 1.21 | 0.84 | 30.48% |
| Comparative g-pam 3 | 5 lb/ton | 1.32 | 0.91 | 31.13% |
|  | 10 lb/ton | 1.94 | 1.52 | 21.77% |
|  | 20 lb/ton | 3.10 | 2.24 | 27.7% |

The data for Comparative g-pam 2 illustrates the good initial wet strength imparted by the polymer of US Pat. No. 3,556,932, as well as the poor wet tensile strength decay. The data for Comparative g-pam 1 illustrates the improved wet tensile strength decay for a lower molecular weight starting polymer (relative to US Pat. No. 3,556,932), as well as the poor initial wet strength imparted by a polymer of US Pat. No. 4, 605,702.

In notable contrast, the data for g-pam1 illustrates an initial wet strength as good, or better, than that of a polymer according to US Pat. No. 3,556,932, while also having wet tensile strength decay as good, or better, than that of a polymer according to US Pat. No. 4,605,702. Thus, the glyoxalated vinylamide copolymer of the present disclosure unexpectedly possesses both efficient initial wet strength build and a high rate of wet tensile strength decay.

Comparative g-pam 3 illustrates that glyoxalating Copolymer A with the glyoxalation method of US Pat. No. 3, 556,932, improved the initial wet tensile strength of the paper, relative to the Comparative g-pam 2, however, the paper has markedly poorer wet tensile strength decay relative to both Comparative g-pam 2 and g-pam 1. Thus, compared to prior art methods of glyoxalation, the glyoxalation method of the present disclosure unexpectedly provides glyoxalated copolymers imparting superior wet strength properties to paper.

Mullen Burst Strength of the finished paper was measured according to TAPPI Test Method T403. The "30 minute Wet Burst Strength" was determined by soaking the treated paper in water at pH 7.0 for 30 minutes and then measuring the wet burst strength. The % Decay is calculated as (initial wet burst strength - 30 minute wet burst strength) / initial wet burst strength. The results are set forth in Table 2.

Table 2

|  | Dosage | Initial Wet Burst Strength (Kpa*m$^2$/g) | 30 minute Wet Burst Strength (Kpa*m$^2$/g) | Wet Burst Decay (%) |
|---|---|---|---|---|
| Comparative g-pam 1 | 5 lb/ton | 0.5987 | 0.2259 | 62% |
|  | 10 lb/ton | 0.8590 | 0.3209 | 63% |
|  | 20 lb/ton | 1.9569 | 0.9706 | 50% |

(continued)

| | Dosage | Initial Wet Burst Strength (Kpa*m$^2$/g) | 30 minute Wet Burst Strength (Kpa*m$^2$/g) | Wet Burst Decay (%) |
|---|---|---|---|---|
| g-pam 1 | 5 lb/ton | 0.6646 | 0.2675 | 60% |
| | 10 lb/ton | 1.3702 | 0.5037 | 63% |
| | 20 lb/ton | 2.2255 | 1.0959 | 51% |
| g-pam 2 | 5 lb/ton | 0.7545 | 0.3424 | 55% |
| | 10 lb/ton | 1.6364 | 0.8440 | 48% |
| | 20 lb/ton | 2.6607 | 1.5849 | 40% |
| g-pam 3 | 5 lb/ton | 0.9733 | 0.4919 | 49% |
| | 10 lb/ton | 1.6115 | 0.9166 | 43% |
| | 20 lb/ton | 2.9817 | 2.0527 | 31% |

The data for "Comparative g-pam 1" illustrates a good wet burst strength decay for this additive, however it also shows that poor initial wet strength is imparted by the polymer of US Pat. No. 4, 605,702. The data for "g-pam 1" shows equal performance in wet burst decay to "Comparative g-pam 1", while advantageously demonstrating a notably higher initial wet burst strength result. The data for "g-pam 2" and "g-pam 3" shows the impact of using higher molecular weight polymers in the process of the disclosure, specifically that additives made from higher Mw polymers show a higher initial wet burst strength result, and a lower level of wet burst strength decay.

**Claims**

1. A cellulose reactive glyoxalated copolymer composition comprising an aqueous medium and 0.1 to 4 weight % of a cellulose reactive glyoxalated vinylamide copolymer, based on the total weight of the aqueous medium, wherein the glyoxalated vinylamide copolymer is obtained by reaction in an aqueous reaction medium of glyoxal and a cationic vinylamide copolymer, a dry weight of glyoxal: cationic copolymer in the aqueous reaction medium ranging from 5 to 40 glyoxal to 95 to 60 cationic vinylamide copolymer, the aqueous reaction medium having a total solids concentration of from 0.3 to 3.0%, the cationic vinylamide copolymer having a weight average molecular weight of 15,000 Daltons to 46,100 Daltons based on total weight of the cationic vinylamide copolymer before reaction with glyoxal, and comprised of 5 to 95 weight % diallyldimethyl ammonium halide monomer and 95 to 5 weight % acrylamide monomer, based on the total weight of the cationic copolymer before glyoxalation.

2. The cellulose reactive glyoxalated copolymer composition according to claim 1, wherein the cationic vinylamide copolymer has a weight average molecular weight of greater than 20,000 Daltons to 25,000 Daltons, based on total weight of the cationic vinylamide copolymer before reaction with glyoxal.

3. The cellulose reactive glyoxalated copolymer composition according to any of claims 1-2, wherein the total solids concentration in the aqueous reaction medium is from 0.5 to 2.5%, from 0.65% to 2%, from 0.75% to 2%, from 0.75 to 1.5%, or from 0.75 to 1%.

4. The cellulose reactive glyoxalated copolymer composition according to any of claims 1-3, wherein the dry weight of glyoxal:cationic copolymer in the aqueous reaction medium ranges from 10 to 30 glyoxal to 90 to 70 cationic vinylamide copolymer, from 20 to 25 glyoxal to 80 to 75 cationic vinylamide copolymer, or 23 glyoxal to 77 cationic vinylamide copolymer.

5. The cellulose reactive glyoxalated copolymer composition according to any of claims 1-4, obtained by reaction carried out at a reaction pH of 8.5 to 12, 9 to 11.5, 9.5 to 11, or 9.5 to 10.5, or 10.5.

6. The cellulose reactive glyoxalated copolymer composition according to any of claims 1-5, obtained by reaction carried out for 10 to 300 minutes, 25 to 250 minutes, 50 to 200 minutes, 100 to 200 minutes, or 100 to 150 minutes.

7. The cellulose reactive glyoxalated copolymer composition according to any of claims 1-6, obtained by reaction carried out at a temperature from 15 to 35°C, from 20 to 30, from 20 to 25°C, or 20°C.

8. A method for preparing a cellulose reactive glyoxalated copolymer composition comprising: reacting a substantially aqueous reaction mixture of a cationic vinylamide copolymer and glyoxal at a dry weight of glyoxal:cationic copolymer in the aqueous reaction medium ranging from 5 to 40 glyoxal to 95 to 60 cationic vinylamide copolymer, the aqueous reaction medium having a total solids concentration of from 0.3 to 3.0%, the cationic vinylamide copolymer having a weight average molecular weight of 15,000 Daltons to 46,100 Daltons based on total weight of the cationic vinylamide copolymer before reaction with glyoxal and comprising 5 to 95 weight % diallyldimethyl ammonium halide monomer and 95 to 5 weight % acrylamide monomer, based on the total weight of the cationic copolymer before glyoxalation and at a reaction pH of 8.5 to 12.

9. The method for preparing a cellulose reactive glyoxalated copolymer composition according to claim 8, wherein the cationic vinylamide copolymer has a weight average molecular weight of greater than 20,000 Daltons to 25,000 Daltons, based on total weight of the cationic vinylamide copolymer before reaction with glyoxal.

10. The method for preparing a cellulose reactive glyoxalated copolymer composition according to any one of claims 8-9, wherein the total solids concentration in the aqueous reaction medium is from 0.5 to 2.5%, from 0.65% to 2%, from 0.75% to 2%, from 0.75 to 1.5%, or from 0.75 to 1%.

11. The method for preparing a cellulose reactive glyoxalated copolymer composition according to any one of claims 8-10, wherein:

 the dry weight of glyoxal: cationic copolymer in the aqueous reaction medium ranges from 10 to 30 glyoxal to 90 to 70 cationic vinylamide copolymer, from 20 to 25 glyoxal to 80 to 75 cationic vinylamide copolymer, or 23 glyoxal to 77 cationic vinylamide copolymer;
 the reaction is carried out at a reaction pH of 8.5 to 12, 9 to 11.5, 9.5 to 11, or 9.5 to 10.5, or 10.5;
 the reaction is carried out for 10 to 300 minutes, 25 to 250 minutes, 50 to 200 minutes, 100 to 200 minutes, or 100 to 150 minutes; and
 the reaction is carried out at a temperature from 15 to 35°C, from 20 to 30, from 20 to 25°C, or 20°C.

12. A method of making paper comprising one of: (a) combining the glyoxalated copolymer composition of any one of claims 1-7 and cellulose fibers; or (b) applying the glyoxalated composition of any one of claims 1-8 to a wet or dry paper.

13. A paper strength additive or coating comprising the glyoxalated copolymer composition of any one of claims 1-7.

14. A paper coated with or comprising the glyoxalated copolymer composition of any one of claims 1-7.


**Patentansprüche**

1. Cellulosereaktive, glyoxalierte Copolymer-Zusammensetzung, umfassend ein wässriges Medium und 0,1 bis 4 Gew.-% eines cellulosereaktiven, glyoxalierten Vinylamid-Copolymers, bezogen auf das Gesamtgewicht des wässrigen Mediums,
wobei das glyoxalierte Vinylamid-Copolymer durch Umsetzung von Glyoxal und einem kationischen Vinylamid-Copolymer in einem wässrigen Reaktionsmedium erhalten wird, wobei das Trockengewicht von Glyoxal:kationischem Copolymer in dem wässrigen Reaktionsmedium im Bereich von 5 bis 40 Glyoxal zu 95 bis 60 kationischem Vinylamid-Copolymer liegt, das wässrige Reaktionsmedium eine Gesamtfeststoffkonzentration von 0,3 bis 3,0 % aufweist, wobei das kationische Vinylamid-Copolymer ein gewichtsmittleres Molekulargewicht von 15.000 Dalton bis 46.100 Dalton, bezogen auf das Gesamtgewicht des kationischen Vinylamid-Copolymers vor der Reaktion mit Glyoxal aufweist und aus 5 bis 95 Gew.-% Diallyldimethylammoniumhalogenid-Monomer und 95 bis 5 Gew.-% Acrylamid-Monomer, bezogen auf das Gesamtgewicht des kationischen Copolymers vor der Glyoxalierung, besteht.

2. Cellulosereaktive glyoxalierte Copolymer-Zusammensetzung gemäß Anspruch 1, wobei das kationische Vinylamid-Copolymer ein gewichtsmittleres Molekulargewicht von mehr als 20.000 Dalton bis 25.000 Dalton, bezogen auf das Gesamtgewicht des kationischen Vinylamid-Copolymers vor der Reaktion mit Glyoxal, aufweist.

3. Cellulosereaktive glyoxalierte Copolymer-Zusammensetzung gemäß einem der Ansprüche 1 bis 2, wobei die Gesamtfeststoffkonzentration in dem wässrigen Reaktionsmedium 0,5 bis 2,5 %, 0,65 % bis 2 %, 0,75 % bis 2 %, 0,75 bis 1,5 % oder 0,75 bis 1 % beträgt.

4. Cellulosereaktive glyoxalierte Copolymer-Zusammensetzung gemäß einem der Ansprüche 1 bis 3, wobei das Trockengewicht von Glyoxal:kationischem Copolymer in dem wässrigen Reaktionsmedium im Bereich von 10 bis 30 Glyoxal zu 90 bis 70 kationischem Vinylamid-Copolymer, von 20 bis 25 Glyoxal zu 80 bis 75 kationischem Vinylamid-Copolymer oder von 23 Glyoxal zu 77 kationischem Vinylamid-Copolymer liegt.

5. Cellulosereaktive, glyoxalierte Copolymer-Zusammensetzung gemäß einem der Ansprüche 1 bis 4, erhalten durch Reaktion bei einem Reaktions-pH-Wert von 8,5 bis 12, 9 bis 11,5, 9,5 bis 11 oder 9,5 bis 10,5 oder 10,5.

6. Cellulosereaktive, glyoxalierte Copolymer-Zusammensetzung gemäß einem der Ansprüche 1 bis 5, erhalten durch eine 10 bis 300 Minuten, 25 bis 250 Minuten, 50 bis 200 Minuten, 100 bis 200 Minuten oder 100 bis 150 Minuten dauernde Reaktion.

7. Cellulosereaktive glyoxalierte Copolymer-Zusammensetzung gemäß einem der Ansprüche 1 bis 6, erhalten durch Reaktion, die bei einer Temperatur von 15 bis 35 °C, von 20 bis 30, von 20 bis 25 °C oder 20 °C erhalten wird.

8. Verfahren zur Herstellung einer cellulosereaktiven glyoxalierten Copolymer-Zusammensetzung, umfassend: Umsetzen einer im wesentlichen wäßrigen Reaktionsmischung aus einem kationischen Vinylamidcopolymer und Glyoxal bei einem Trockengewicht von Glyoxal:kationischem Copolymer in dem wäßrigen Reaktionsmedium im Bereich von 5 bis 40 Glyoxal zu 95 bis 60 kationischem Vinylamidcopolymer, wobei das wäßrige Reaktionsmedium eine Gesamtfeststoffkonzentration von 0,3 bis 3,0 %, das kationische Vinylamid-Copolymer ein gewichtsmittleres Molekulargewicht von 15.000 Dalton bis 46.100 Dalton, bezogen auf das Gesamtgewicht des kationischen Vinylamid-Copolymers vor der Reaktion mit Glyoxal, aufweist und 5 bis 95 Gew.-% Diallyldimethylammoniumhalogenid-Monomer und 95 bis 5 Gew.-% Acrylamid-Monomer umfasst, bezogen auf das Gesamtgewicht des kationischen Copolymers vor der Glyoxalierung, und bei einem Reaktions-pH-Wert von 8,5 bis 12.

9. Verfahren zur Herstellung einer cellulosereaktiven glyoxalierten Copolymer-Zusammensetzung gemäß Anspruch 8, wobei das kationische Vinylamid-Copolymer ein gewichtsmittleres Molekulargewicht von mehr als 20.000 Dalton bis 25.000 Dalton hat, bezogen auf das Gesamtgewicht des kationischen Vinylamid-Copolymers vor der Reaktion mit Glyoxal.

10. Verfahren zur Herstellung einer cellulosereaktiven glyoxalierten Copolymer-Zusammensetzung gemäß einem der Ansprüche 8 bis 9, wobei die Gesamtfeststoffkonzentration in dem wässrigen Reaktionsmedium 0,5 bis 2,5 %, 0,65 % bis 2 %, 0,75 bis 2 %, 0,75 bis 1,5 % oder 0,75 bis 1 % beträgt.

11. Verfahren zur Herstellung einer cellulosereaktiven, glyoxalierten Copolymer-Zusammensetzung gemäß einem der Ansprüche 8 bis 10, wobei:

das Trockengewicht von Glyoxal:kationischem Copolymer in dem wässrigen Reaktionsmedium im Bereich von 10 bis 30 Glyoxal zu 90 bis 70 kationischem Vinylamid-Copolymer, von 20 bis 25 Glyoxal zu 80 bis 75 kationischem Vinylamid-Copolymer oder 23 Glyoxal zu 77 kationischem Vinylamid-Copolymer liegt;
die Reaktion bei einem Reaktions-pH-Wert von 8,5 bis 12, 9 bis 11,5, 9,5 bis 11 oder 9,5 bis 10,5 oder 10,5 erhalten wird;
die Reaktion für 10 bis 300 Minuten, 25 bis 250 Minuten, 50 bis 200 Minuten, 100 bis 200 Minuten oder 100 bis 150 Minuten durchgeführt wird; und
die Reaktion bei einer Temperatur von 15 bis 35 °C, von 20 bis 30, von 20 bis 25 °C oder 20 °C durchgeführt wird.

12. Verfahren zur Herstellung von Papier, umfassend einen der folgenden Schritte: (a) Kombinieren der glyoxalierten Copolymer-Zusammensetzung gemäß einem der Ansprüche 1 bis 7 und Zellulosefasern; oder (b) Aufbringen der glyoxalierten Zusammensetzung gemäß einem der Ansprüche 1 bis 8 auf ein nasses oder trockenes Papier.

13. Papierfestigkeitsadditiv oder Beschichtung, umfassend die glyoxalierte Copolymer-Zusammensetzung gemäß einem der Ansprüche 1 bis 7.

14. Papier, beschichtet mit oder enthaltend die glyoxalierte Copolymer-Zusammensetzung gemäß einem der Ansprüche 1 bis 7.

**Revendications**

1. Composition de copolymère glyoxalé réactif à la cellulose comprenant un milieu aqueux et 0,1 à 4 % en poids d'un copolymère de vinylamide glyoxalé réactif à la cellulose, sur la base du poids total du milieu aqueux, dans laquelle le copolymère de vinylamide glyoxalé est obtenu par réaction dans un milieu réactionnel aqueux de glyoxal et d'un copolymère de vinylamide cationique, un poids sec de glyoxal/copolymère cationique dans le milieu réactionnel aqueux allant de 5 à 40 glyoxal à 95 à 60 copolymère de vinylamide cationique, le milieu réactionnel aqueux ayant une concentration totale de matières solides de 0,3 à 3,0 %, le copolymère de vinylamide cationique ayant un poids moléculaire moyen en poids de 15 000 daltons à 46 100 daltons sur la base du poids total du copolymère de vinylamide cationique avant réaction avec le glyoxal, et composé de 5 à 95 % en poids de monomère halogénure de diallyldiméthylammonium et 95 à 5 % en poids de monomère acrylamide, sur la base du poids total du copolymère cationique avant glyoxalation.

2. Composition de copolymère glyoxalé réactif à la cellulose selon la revendication 1, dans laquelle le copolymère de vinylamide cationique a un poids moléculaire moyen en poids supérieur à 20 000 daltons à 25 000 daltons, sur la base du poids total du copolymère de vinylamide cationique avant réaction avec le glyoxal.

3. Composition de copolymère glyoxalé réactif à la cellulose selon l'une quelconque des revendications 1-2, dans laquelle la concentration totale de matières solides dans le milieu réactionnel aqueux est de 0,5 à 2,5 %, de 0,65 % à 2 %, de 0,75 % à 2 %, de 0,75 à 1,5 %, ou de 0,75 à 1 %.

4. Composition de copolymère glyoxalé réactif à la cellulose selon l'une quelconque des revendications 1-3, dans laquelle le poids sec de glyoxal/copolymère cationique dans le milieu réactionnel aqueux va de 10 à 30 de glyoxal à 90 à 70 de copolymère de vinylamide cationique, de 20 à 25 de glyoxal à 80 à 75 de copolymère de vinylamide cationique, ou de 23 de glyoxal à 77 copolymère cationique de vinylamide.

5. Composition de copolymère glyoxalé réactif à la cellulose selon l'une quelconque des revendications 1-4, obtenu par réaction réalisée à un pH réactionnel de 8,5 à 12, 9 à 11,5, 9,5 à 11, ou 9,5 à 10,5, ou 10,5.

6. Composition de copolymère glyoxalé réactif à la cellulose selon l'une quelconque des revendications 1-5, obtenue par réaction réalisée pendant 10 à 300 minutes, 25 à 250 minutes, 50 à 200 minutes, 100 à 200 minutes ou 100 à 150 minutes.

7. Composition de copolymère glyoxalé réactif à la cellulose selon l'une quelconque des revendications 1-6, obtenue par réaction réalisée à une température de 15 à 35 °C, de 20 à 30, de 20 à 25 °C ou 20 °C.

8. Procédé de préparation d'une composition de copolymère glyoxalé réactif à la cellulose comprenant : la réaction d'un mélange réactionnel sensiblement aqueux d'un copolymère de vinylamide cationique et de glyoxal à un poids sec de copolymère glyoxal/cationique dans le milieu réactionnel aqueux allant de 5 à 40 glyoxal à 95 à 60 copolymère de vinylamide cationique, le milieu réactionnel aqueux ayant une concentration totale de matières solides de 0,3 à 3,0 %, le copolymère de vinylamide cationique ayant un poids moléculaire moyen en poids de 15 000 daltons à 46 100 daltons, sur la base du poids total du copolymère cationique de vinylamide avant réaction avec le glyoxal et comprenant 5 à 95 % en poids de monomère halogénure de diallyldiméthylammonium et 95 à 5 % en poids de monomère acrylamide, sur la base du poids total du copolymère cationique avant glyoxalation et à un pH réactionnel de 8,5 à 12.

9. Procédé de préparation d'une composition de copolymère glyoxalé réactif à la cellulose selon la revendication 8, dans lequel le copolymère de vinylamide cationique a un poids moléculaire moyen en poids supérieur à 20 000 daltons à 25 000 daltons, sur la base du poids total du copolymère de vinylamide cationique avant réaction avec le glyoxal.

10. Procédé de préparation d'une composition de copolymère glyoxalé réactif à la cellulose selon l'une quelconque des revendications 8-9, dans lequel la concentration totale de matières solides dans le milieu réactionnel aqueux est de 0,5 à 2,5 %, de 0,65 % à 2 %, de 0,75 % à 2 %, de 0,75 à 1,5 %, ou de 0,75 à 1 %.

**11.** Procédé de préparation d'une composition de copolymère glyoxalé réactif à la cellulose selon l'une quelconque des revendications 8-10, dans lequel :

le poids sec de glyoxal/copolymère cationique dans le milieu réactionnel aqueux va de 10 à 30 de glyoxal à 90 à 70 de copolymère de vinylamide cationique, de 20 à 25 de glyoxal à 80 à 75 de copolymère de vinylamide cationique, ou de 23 de glyoxal à 77 copolymère cationique de vinylamide ;
la réaction est réalisée à un pH réactionnel de 8,5 à 12, 9 à 11,5, 9,5 à 11, ou 9,5 à 10,5, ou 10,5 ;
la réaction est réalisée pendant 10 à 300 minutes, 25 à 250 minutes, 50 à 200 minutes, 100 à 200 minutes ou 100 à 150 minutes ; et
la réaction est effectuée à une température de 15 à 35 °C, de 20 à 30 °C, de 20 à 25 °C, ou 20 °C.

**12.** Procédé de fabrication de papier comprenant un parmi : (a) la combinaison de la composition de copolymère glyoxalé selon l'une quelconque des revendications 1-7 et des fibres de cellulose ; ou (b) l'application de la composition glyoxalée selon l'une quelconque des revendications 1-8 sur un papier humide ou sec.

**13.** Additif ou enduit de renforcement de papier comprenant la composition de copolymère glyoxalé selon l'une quelconque des revendications 1-7.

**14.** Papier enduit de ou comprenant la composition de copolymère glyoxalé selon l'une quelconque des revendications 1-7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3556932 A
- US 4605702 A
- US 7727359 B
- EP 2386580 A2

### Non-patent literature cited in the description

- **MITCHEL, R.E.J et al.** The use of Girard-T reagent in a rapid and sensitive method for measuring glyoxal and certain other odicarbonyl compounds. *Analytical Biochemistry,* July 1977, vol. 81 (1), 47-56